## Europäisches Patentamt

## European Patent Office

## Office européen des brevets

(11) Veröffentlichungsnummer: **0 208 064**
**B1**

(12) # EUROPÄISCHE PATENTSCHRIFT

(45) Veröffentlichungstag der Patentschrift:
13.06.90

(51) Int. Cl.⁵: **B44C 1/17**, C04B 41/88

(21) Anmeldenummer: 86104587.0

(22) Anmeldetag: 04.04.86

(54) Verfahren zur Herstellung von kratz- und abriebfesten Edelmetalldekoren.

(30) Priorität: 12.07.85 DE 3524912

(43) Veröffentlichungstag der Anmeldung:
14.01.87 Patentblatt 87/3

(45) Bekanntmachung des Hinweises auf die Patenterteilung:
13.06.90 Patentblatt 90/24

(84) Benannte Vertragsstaaten:
AT BE CH DE FR GB IT LI NL

(56) Entgegenhaltungen:
DE-B- 1 233 769
GB-A- 1 154 890
GB-A- 2 099 760

PATENT ABSTRACTS OF JAPAN, Band 7,
Nr. 1 (M-183)[1146], 6. Januar 1983; &
JP-A-57 160 689 (NARUMI SEITOU K.K.) 04-10-1982

(73) Patentinhaber: Degussa Aktiengesellschaft,
Weissfrauenstrasse 9, D-6000 Frankfurt am Main 1(DE)

(72) Erfinder: Pfaff, Peter, Dr., Buchenweg 4,
D-6242 Kronberg 2(DE)

## Beschreibung

Die Erfindung betrifft ein Verfahren zur Herstellung von kratz- und abriebfesten Edelmetalldekoren auf keramischen Oberflächen, direkt, über ein Abziehbild oder einen sonstigen Zwischenträger, wobei zunächst ein Glanzedelmetallpräparat und darüber ein feingemahlener, mit einem Siebdrucköl versetzter silikatischer Fluß aufgetragen und mittels eines Brandes eingebrannt werden.

Golddekore auf keramischen Oberflächen, wie Porzellan, Steingut, Email oder Glas, weisen wegen der geringen Ritzhärte von Gold auch nur eine geringe Abrieb- und Kratzfestigkeit auf. So werden vergoldete Tellerränder sehr schnell durch die rauhen Tellerfüße zerkratzt und abgeschliffen. Bei Wandplatten scheut man sich vor Golddekoren, da die Goldschicht der Dauerbeanspruchung durch Scheuersand nicht widersteht.

Es ist möglich, auf eingebrannte Golddekore in einem weiteren Brand einen transparenten Fluß aufzuschmelzen – vgl. DE-AS 1 233 769. Dieses mit Fluß überzogene Gold ist kratzfest. Jedoch ist dieses Verfahren sehr umständlich, da ein zweiter Druck oder ein zweites Abziehbild mit dem Fluß passergenau auf das eingebrannte Golddekor aufgebracht werden muß und ein erneuter Brand erforderlich wird.

Aus der DE-OS 3 122 546 sind keramische Abziehbilder bekannt, bei denen zwischen Glanzedelmetallpräparat und Träger eine Unterlageschicht angeordnet wird, die Bleiborosilikatfritte enthält. Mit einem einmaligen Brand läßt sich hiermit eine matte Edelmetall-Dekoration erzielen, die jedoch nicht kratz- und abriebfest ist.

Es war daher Aufgabe der vorliegenden Erfindung, ein Verfahren zur Herstellung von kratz- und abriebfesten Edelmetalldekoren auf keramischen Oberflächen, direkt, über Abziehbilder oder einen sonstigen Zwischenträger, wobei ein Glanzedelmetallpräparat und ein feingemahlener, mit einem Siebdrucköl versetzter silikatischer Fluß aufgetragen werden, zu entwickeln, das einfach durchzuführen ist.

Diese Aufgabe wurde erfindungsgemäß dadurch gelöst, daß zunächst das Glanzedelmetallpräparat und darüber der Fluß aufgetragen wird und Glanzedelmetallpräparat und Fluß in einem Brand zwischen 450° und 1050° eingebrannt werden.

Überraschenderweise erhält man mit diesem Verfahren Edelmetallüberzüge auf keramischen Oberflächen, die kratz- und abriebfest sind und sich leicht aufbringen lassen.

Hierbei werden ein Glanzedelmetallpräparat und ein Fluß im gleichen Brand auf einmal eingebrannt. Der Glanzedelmetallfilm wird durch den darüberliegenden Fluß, der eine hohe Ritzhärte hat, vor mechanischen Angriffen geschützt. Auch die Beständigkeit gegen chemische Angriffe, wie Anlaufen silberhaltiger Glanzgolde und Beständigkeit beim maschinellen Spülen, wird verbessert.

Aufgrund der welligen Oberfläche erhalten diese mit Fluß überzogenen Glanzedelmetalle den Charakter von Polierpräparaten.

Als Glanzedelmetallpräparate können Glanzgolde, Glanzsilber oder sonstige edelmetallhaltige Präparate in flüssiger Form, als Paste oder als thermoplastische Masse aufgebracht werden.

Besonders dekorative und trotzdem kratz- und abriebfeste Glanzedelmetalldekore erhält man, wenn man als Fluß ein Bleisilikatglas und als Siebdrucköl Polymethacrylate, Celluloseäther und/oder Celluloseester verwendet. Die Bleisilikatgläser haben vorteilhafterweise eine Zusammensetzung von 30 bis 80 % Bleioxid, 5 bis 60 % Siliziumdioxid, 0 bis 25 % Boroxid, je 0 bis 10 % Alkalioxid und Aluminiumoxid und 0 bis 5 % Zirkoniumoxid.

Die Dekorationsschicht aus Glanzedelmetallpräparat und feingemahlenem, mit einem Siebdrucköl versetzten Fluß kann sowohl direkt auf die keramische Oberfläche aufgetragen werden als auch über ein Abziehbild oder einen sonstigen Zwischenträger, wie z.B. eine Silikonmembran auf die Oberfläche übertragen werden.

Zusätzlich können auch noch keramische Farben aufgebracht werden, um das Edelmetall, vorzugsweise Gold, mit einem Farbdekor zu kombinieren. Ebenfalls kann auch der Fluß eingefärbt werden.

Folgendes Beispiel soll die Erfindung näher erläutern:

Zum Druck von Abziehbildern verwendet man ein mit wasserlöslichem Leimstrich versehenes Papier. Darauf wird ein für Abziehbilder geeignetes Glanzgoldpräparat im Siebdruck mit Polyestergewebe 120 Faden/cm gedruckt. Nach dem Trocknen wird ebenfalls im Siebdruck eine Paste aus einem Siebdrucköl und einem leichtschmelzenden Bleiborosilikatfluß in Siebdruckfeinheit darüber gedruckt.

Als Siebdrucköl verwendet man eine Lösung von Polymethacrylaten in aromatenreichen Schwerbenzinen, während der feingemahlene Fluß die Segerformel

$$0,6 \, PbO \qquad 4 \, SiO_2$$
$$0,4 \, Na_2O \qquad 1 \, B_2O_3$$

aufweist.

Als Filmlösung dient eine Lösung von Polymethacrylaten in Trimethylbenzol. Das Abziehbild wird in Wasser gelegt und nach Quellen der Leimschicht wird der Film mit anhängender Flußschicht und Glanzgoldschichten auf Porzellan übertragen und bei 800° C eingebrannt.

Die so erhaltene Glanzgoldschicht ist kratz- und abriebfest.

## Patentansprüche

1. Verfahren zur Herstellung von kratz- und abriebfesten Edelmetalldekoren auf keramischen Oberflächen, direkt, über ein Abziehbild oder einen sonstigen Zwischenträger, wobei ein Glanzedelmetallpräparat und ein feingemahlener, mit einem Siebdrucköl versetzter silikatischer Fluß aufgetragen werden, dadurch gekennzeichnet, daß zunächst das Glanzedelmetallpräparat und darüber der Fluß aufgetragen wird und Glanzedelmetallpräparat und Fluß in einem Brand zwischen 450 und 1050°C eingebrannt werden.

2. Verfahren zur Herstellung von Edelmetalldekoren nach Anspruch 1, dadurch gekennzeichnet, daß als Fluß ein Bleisilikatglas und als Siebdrucköl Polymethacrylate, Celluloseäther und/oder Celluloseester verwendet werden.

3. Verfahren zur Herstellung von Edelmetalldekoren nach Anspruch 1 und 2, dadurch gekennzeichnet, daß Flüsse der Zusammensetzung 30 bis 80% Bleioxid, 5 bis 60% Siliziumdioxid, 0 bis 25% Boroxid, je 0 bis 10% Alkalioxid und Aluminiumoxid und 0 bis 5% Zirkoniumoxid eingesetzt werden.

## Claims

1. A process for the production of scratch-resistant and abrasion-resistant noble-metal decorations on ceramic surfaces either directly or <u>via</u> a transfer pattern or other intermediate support, a bright nobel metal preparation and a finely ground silicate-based flux containing screen printing oil being applied, characterized in that the bright noble metal preparation is applied first, followed by the flux, and the bright noble metal preparation and the flux are subjected to single firing at 450 to 1050°C.

2. A process for the production of noble metal decorations as claimed in claim 1, characterized in that a lead silicate glass is used as the flux and polymethacrylates, cellulose ethers and/or cellulose esters are used as the screen printing oil.

3. A process for the production of noble metal decorations as claimed in claims 1 and 2, characterized in that fluxes consisting of 30 to 80% lead oxide, 5 to 60% silicon dioxide, 0 to 25% boron oxide, 0 to 10% alkali oxide, 0 to 10% aluminium oxide and 0 to 5% zirconium oxide are used.

## Revendications

1. Procédé pour la production de décors en métaux nobles résistants à la rayure et à l'abrasion sur des surfaces céramiques, directement, par l'intermédiaire d'une décalcomanie ou d'un autre support intermédiaire, dans lequel on applique une composition de métal noble brillant et un fondant silicieux finement broyé, additionné d'une huile sérigraphi-que, caractérisé en ce que l'on applique d'abord la composition de métal noble brillant, et, sur celle-ci, le fondant et composant de métal noble brillant et fondant sont cuits en une cuisson entre 450 et 1050°C.

2. Procédé pour la production de décors en métaux nobles selon la revendication 1, caractérisé en ce que l'on utilise en tant que fondant un verre à base de silicate de plomb, et, en tant qu'huile sérigra-phique, des polyméthacrylates, éthers de cellulose et/ou esters de cellulose.

3. Procédé pour la production de décors en métaux nobles selon la revendication 1 ou 2, caractérisé en ce que l'on utilise des fondants composés de 30 à 80% d'oxyde de plomb, 5 à 60% de dioxyde de silicium, 0 à 25% d'oxyde de bore, 0 à 10% chaque d'oxyde alcalin et d'oxyde d'aluminium et 0 à 5% d'oxyde de zirconium.